# EUROPÄISCHE PATENTANMELDUNG

(11) **EP 1 862 278 A1**
(43) Veröffentlichungstag der Anmeldung: **05.12.2007**
(21) Anmeldenummer: 07010785.9
(22) Anmeldetag: 31.05.2007
(51) Int. Cl.: B27K 3/34, B27K 3/10, B27K 3/15

(54) **Anlage, Verfahren und Tränkmittel zur Behandlung von nachwachsenden Rohstoffen (Holz) und cellulosegebundenen Pflanzen**

(30) Priorität: 31.05.2006 DE 102006025739
(71) Anmelder: Nies, Jan, 22147 Hamburg (DE)
(72) Erfinder: Nies, Jan, 22147 Hamburg (DE)
(74) Vertreter: Hauck Patent- und Rechtsanwälte

(57) **Zusammenfassung**

Verfahren zum Tränken von frischem und feuchtem Holz mit mindestens einem kohlenwasserstoffhaltigen Tränkmittel, bei dem das Holz in das Tränkmittel eingetaucht und einer Temperaturbehandlung bei mindestens 120 °C unterworfen wird, wobei das Wasser in Form von Wasserdampf aus dem Holz austritt und durch das Tränkmittel ersetzt wird, so daß im behandelten Holz die Holzfeuchte auf einen Restfeuchtegehalt von höchstens 20 °C herabgesetzt wird, wobei das Holz nach dem Schälen und Sägen vor dem Tränken in einer klimatisierten Feuchtraumhalle bei einer Temperatur von 35 bis 55 °C und/oder einer relativen Luftfeuchtigkeit von mindestens 90 °C gelagert wird.

## Beschreibung

### Technisches Gebiet

Die vorliegende Erfindung betrifft eine Anlage, Verfahren und Tränkmittel zur Behandlung von nachwachsenden Rohstoffen (Holz) und cellulosegebundenen Pflanzen; insbesondere zur Veredlung und Verfestigung von Weichhölzern um eine höhere statistische Festigkeit (Druckfestigkeit) sowie höhere Biegeeigenschaften zu erreichen.

Die vorliegende Erfindung betrifft eine Holzbehandlungsanlage sowie ein Verfahren zum Tränken von grünem, frisch geschlagenem Holz mit einer Feuchte von mindestens 120-180 %.

Getaucht wird das grüne, frisch geschlagene Holz mit einem kohlenwasserstoffhaltigen Tränkungsmittel (Tränkmittelbeispiel: gebundene Pflanzenfette, künstlich hergestellte Parafine sowie Erdölprodukte (Wachse)) - zum Tauchen von nachwachsenden Rohstoffen (Faserprodukte, wie Holz- und Zellstoffansammlungen).

### Stand der Technik

Um die hygroskopischen + physikalischen Eigenschaften des Holzes zu stabilisieren, wird bereits heute Holz mit Kohlenwasserstoffen, zum Beispiel mit Parafin oder Wachs getränkt.

Das Holz kann in öl- wie auch wachshaltigen Materialien erhitzt, wie auch durch Tränkung durch Überdruck- bzw. Unterdruckbehandlung mit einem kohlenwasserstoffhaltigen Imprägniermittel bearbeitet werden. Hierbei wurde beobachtet, daß beim Tränken von nassem Holz, zum Beispiel von Holz mit einer Holzfeuchte von 90 % eine deutlich bessere Aufnahme des Kohlenwasserstoffs durch das Holz erzielt wird.

Auch wenn zahlreiche Verfahren zum Tränken von Holz mit Kohlenwasserstoffen bereits bekannt sind, so ist bislang kein Verfahren bekannt, welches eine völlige Durchtränkung des gesamten Holzkörpers bei allen Nadel- und Weichlaubhölzem bis zu einem sehr großen Querschnitt ermöglicht.

### Darstellung der Erfindung: Aufgabe, Lösung, Vorteile

Der vorliegenden Erfindung liegt die Aufgabe zugrunde, ein Verfahren zur Veredlung von Weichhölzern und schnell wachsenden Rohstoffen zu entwickeln sowie das Verfahren in der Form weiterzuentwickeln, daß eine völlige Durchtränkung des Materials in beliebiger Dimension mit insbesondere kohlenwasserstoffhaltigem Tränkmittel ermöglicht wird und gleichzeitig in zuverlässiger Weise alle Poren und Luftpufferschichten, wie auch der gesamte Zellaufbau mit Parafinen und Ölen ausgefüllt und grundsätzlich Schwund- und Rissbildung durch das Tauchverfahren vermieden wird.

Die Aufgabe wird durch Verfahren mit den Merkmalen der Ansprüche 1 und/oder 2 und/oder 5 gelöst. Vorteilhafte Ausgestaltungen der Verfahren sind in den Unteransprüchen angegeben.

### Fällzeiten

Das zu behandelnde Holz weist eine Holzfeuchte von 120-180 % auf. Der Holzfeuchtegehalt (Kurzzeichen: u) ist definiert als das Verhältnis der Masse des Wassers in einem gegebenen Stück Holz zur Masse des vollständig getrockneten Holzes. Dieses Verhältnis wird als prozentuale Holzfeuchte angegeben.

Der vorliegenden Erfindung liegt nun die Idee zugrunde, grünes, frisch geschlagenes Holz, dessen Zellverschlüsse bzw. Zellverbindungen (so genannte Tüpfel) noch offen sind, zu tränken oder zu tauchen und dabei das im Holz vorhandene Wasser vollständig mit einem Tränkungsmittel zu ersetzen.

Das Holz muß erfindungsgemäß in der Wachstumsphase gefällt werden. Die Fällzeit ist somit auf die Monate April - Mitte November begrenzt.

Durch die erfindungsgemäße Behandlung des Holzes soll dieses dauerhaft vor neuen Wassereinschlüssen und Austausch der Tränkungsmittel geschützt werden. Es ist deshalb erforderlich, für die erfindungsgemäße Holzbehandlung grünes, frisch geschlagenes Holz nach seinem Einschlag innerhalb von einem Zeitraum von 4 Wochen zu behandeln. Nur unter diesen Umständen ist es möglich, eine vollständige Sättigung der Zellen bis in den Kern zu erreichen.

Vier Wochen nach Fällzeit findet eine Veränderung der Zellwände und der Struktur des Holzes statt - die sogenannte Verglasung der Zellwände. Tritt dieses ein, ist kein vollständiger Tauchprozeß bis in den Kern mehr möglich.

### Verarbeitungszeitraum des Holzes

Nach Verarbeitung im Schälwerk muß das Holz innerhalb von 8 Stunden im Sägewerk weiter verarbeitet werden. Dann ist eine umgehende Lagerung in einer klimatisierten Feuchtraumhalle erforderlich. Hier wird das Holz für den Tauchvorgang vorbereitet - durch Lagerung bei einer Temperatur von 35-55 °C und einer Luftfeuchtigkeit in Höhe von 90 %. Das Holz muß eine Temperatur von 35-55 °C erreichen.

Diese Vorbereitung ist notwendig, um ein Schwinden, Verziehen und auch Rissbildung zu vermeiden, welche bei nicht klimatisierten Hölzern beim Tauchvorgang auftritt. Dieses würde die statischen Eigenschaften des Holzes stark beeinträchtigen.

### Verfahrensweise

### Tauchanlage

Die Holzbehandlungsanlage gemäß der vorliegenden Erfindung weist mindestens einen korrosionsfreien, thermostabilen und druckfesten Behälter zur Aufnahme des zu tränkenden Holzes sowie des Tränkmittels auf

Im Rahmen der Entwicklung der vorliegenden Erfindung hat sich gezeigt, daß der innere Wannenkörper, wie auch Deckel inkl. Absauganlage für Wasserdampfbildung und Gase, wie Anschlussteile aus korrosionsfreiem Stahl vorteilhafterweise mit einem mechanisch beanspruchbaren und temperaturstabilen Oberflächenschutz hergestellt wird. Da solch ein Oberflächenschutz hinsichtlich seiner Dauerhaftigkeit begrenzt ist und regelmäßige Nacharbeiten erfordert, ist die Verwendung von korrosionsbeständigen Stählen (V2A-Stahl) erforderlich.

### Ausstattung der Holzbehandlungsanlage

Die Tauchanlage weist im Bodenbereich wie auch im Seitenbereich der Wände eine Heizeinheit wie mehrere Pumpen (Umwälzpumpen, Strömungspumpen), zur kontinuierlichen Bewegung des Tränkmittels auf. Hierdurch erfolgt eine gleichmäßige Umspülung des Werkstoffes.

Durch Umwälzung der Tränkmittel, insbesondere die Menge des zugeführten Tränkmittels während der Behandlung der eingetauchten Weichholzarten, kann in zuverlässiger Weise verhindert werden, daß sich Wärmenester und/oder Wärmestaus einstellen.

Mittels einer druckgesteuerten und/oder temperaturgesteuerten Vorrichtung in der Tauchanlage, mittels Pumpensteuerung und elektronischen Messfühlern wird eine Umspülung des Holzes mit einer exakten Temperatur gehalten, die beim Tauchvorgang nur um 0,5 °C abweichen darf.

Bei einer vorteilhaften Ausgestaltung der vorliegenden Erfindung weist die Tauchanlage eine beheizbare Abtropfvorrichtung zum Lagern der behandelten Materialien (Holz + Zellstoffmaterialien) auf.

Des Weiteren weist die Tauchanlage mindestens eine Haltevorrichtung zum Eintauchen und zur Entnahme des Werkstoffes sowie zum Auffangen des vom behandelten Material abtropfenden Tränkmittels auf.

Die Tauchanlage hat eine Vakuum- oder Druckpumpe zur Erzeugung von Unter- oder Überdruck im Behälter, um eine Beschleunigung des Tauchvorganges herbeizuführen.

### Tauchverfahren

Nach Vorbereitung des Holzes in der klimatisierten Feuchtraumhalle werden die Weichhölzer (Birke, Kiefer, Pappel, Fichte) in die Tauchwanne eingebracht und veredelt.

Das Holz wird bei einer Temperatur von 126,5 °C, welche exakt einzuhalten ist, getaucht.

Eine höhere Tauchtemperatur fuhrt zu statischen Verlusten der Holzsubstanz. Die Tauchzeiten werden durch den Querschnitt des Holzes bestimmt. Bei Durchmessern von 20-60 mm im Querschnitt beträgt die Tauchzeit 8 Stunden, bei Querschnitten von 90 x 90 mm kann eine Tauchzeit von bis zu 20 Stunden erforderlich sein.

Erfindungsgemäß wird eine Restfeuchte des getränkten Holzes in Höhe von 3,5 % - 8 % erreicht. Es handelt sich hierbei um gebundene Restfeuchte, die in den Cellulosewänden vorhanden ist. Diese darf in keinem Fall weiter heruntergesetzt werden, um den Zellaufbau in der Statik der gebundenen Zellwände nicht zu beschädigen. Nur so wird eine dauerhafte Standfestigkeit des Zellaufbaus erhalten.

Ein weiterer Vorteil des erfindungsgemäßen Verfahrens der Holzbehandlung liegt darin, die Zellstruktur des Holzes durch das Ausscheiden von Wasser und Zusatzstoffen vollständig mit Parafin oder gebundenen Fetten, Festhaltestoffen (Öle) zu füllen und die Druckfestigkeit und nachträgliche Rissbildung - wie Schwinden des Holzes - zu verhindern.

Durch die Tauchanlage sowie durch das Behandlungsverfahren mittels des Tränkmittels in der Behälteranlage zur dauerhaften Nutzung von Holz ist eine dauerhafte, ökologisch unbedenkliche Holzveredlung insbesondere für extreme mechanische Beanspruchung und stark belastbaren Druck sowie klimatische Bedingungen gewährleistet.

### Tränkungsmittel

Das Tränkungsmittel kann aus folgenden Komponenten bestehen:
- Öle mit Festigungsmitteln, die nach Abkühlen des Holzkörpers erhärten
- Wachse, wie Parafine mit unterschiedlich hergestellten Molekülketten, um die Schmelzpunkte bei unterschiedlichen Temperaturen zu steuern (50-130 °C Schmelzpunkt der Wachse und Parafine)
- Fließmittel - Die Parafine, wie Wachse, werden mit einem hergestellten Fließmittel so chemisch eingestellt, daß die Parafine und Wachse die Eigenschaften aufweisen, die erforderlich sind, die Hölzer bis in den Kern zu tauchen.

Es ist möglich, die Holzkörper in bestimmten Tauchzeiten und bei bestimmten Tauchtemperaturen so zu steuern, daß unterschiedliche, ansprechende bräunliche Oberflächen erreicht werden, die der der tropischen Hölzer gleich kommen. Durch Einbringen von Farbpigmenten in das Tränkungsmittel ist es möglich, die Holzkörper von Weichholz in verschiedenen Farbtönen bis in den Kern einzufärben. Dadurch wird es ermöglicht, die Hölzer nach dem Tauchverfahren zu bearbeiten und eine schöne, farblich variable Oberfläche zu erreichen. Diese kommt der Optik der durch das herkömmliche Beizverfahren bearbeiteten Hölzer gleich.

Weitere Einzelheiten des Verfahrens sind in der deutschen Patentanmeldung 10 2004 020 729.1 angegeben. Die Offenbarung dieser Patentanmeldung ist durch diese Bezugnahme in die vorliegende Patentanmeldung einbezogen.

Es folgen weitere Erfindungsmerkmale. Die Anmelderin behält sich vor, diese allein oder in beliebiger Kombination zum Gegenstand weiterer Ansprüche zu machen.

### Technisches Gebiet

Die vorliegende Erfindung betrifft eine Holzbehandlungsanlage sowie ein Verfahren zum Tränken von frisch geschlagenem Holz (nach Fälldatum 4 Wochen bis zur Verarbeitung; die Zeit kann verlängert werden durch Lagerung in einer Feuchtraumhalle (siehe unten) -> insgesamt 8 Wochen) mit einer Feuchte von mindestens 120-180%.
Getaucht wird das frisch geschlagene Holz mit einem kohlenwasserstoffhaltigen Tränkungsmittel (Tränkmittelbeispiel: gebundene Pflanzenfette, künstlich hergestellte Paraffine sowie Erdölprodukte (Wachse)) - zum Tauchen von nachwachsenden Rohstoffen (Holz (Stammware)).

### Darstellung der Erfindung: Aufgabe, Lösung, Vorteile

Der vorliegenden Erfindung liegt die Aufgabe zugrunde, eine Verfahren zur Veredlung von Weichhölzern und schnell wachsenden Bäumen zu entwickeln sowie das Verfahren in der Form weiterzuentwickeln, dass eine völlige Durchtränkung des Materials in beliebiger Dimension mit insbesondere kohlenwasserstoffhaltigem Tränkmittel ermöglicht wird und gleichzeitig in zuverlässiger Weise alle Poren und Luftpufferschichten, wie auch der gesamte Zellaufbau mit Paraffinen und Ölen ausgefüllt und grundsätzlich Schwund- und Rissbildung durch das Tauchverfahren vermieden wird.

### Fällzeiten

Das zu behandelnde Holz weist eine Holzfeuchte von 920-180% auf.
Der Holzfeuchtegehalt (Kurzzeichen: u) ist definiert als das Verhältnis der Masse des Wassers in einem gegebenen Stück Holz zur Masse des vollständig getrockneten Holzes. Dieses Verhältnis wird als prozentuale Holzfeuchte angegeben.

Der vorliegenden Erfindung liegt nun die Idee zugrunde, frisch geschlagenes Holz (nach Fällzeit 4 Wochen), dessen Zellverschlüsse bzw. Zellverbindungen (so genannte Tüpfel) noch offen sind, zu tränken oder zu tauchen und dabei das im Holz vorhandene Wasser vollständig mit einem Tränkungsmittel zu ersetzen. Das Holz muss erfindungsgemäß in der Wachstumsphase gefällt werden. Die Fällzeit ist somit auf die Monate April - Mitte November begrenzt.

Durch die erfindungsgemäße Behandlung des Holzes, soll dieses dauerhaft vor neuen Wassereinschlüssen und Austausch der Tränkungsmittel geschützt werden. Es ist deshalb erforderlich für die erfindungsgemäße Holzbehandlung frisch geschlagenes. Holz nach seinem Einschlag innerhalb von einem Zeitraum von 4 Wochen zu behandeln. Nur unter diesen Umständen ist es möglich, eine vollständige Sättigung der Zellen bis in den Kern zu erreichen.

Vier Wochen nach Fällzeit findet eine Veränderung der Zellwände und der Struktur des Holzes statt - die so genannte Verglasung der Zellwände. Tritt dieses ein, ist kein vollständiger Tauchprozess bis in den Kern mehr möglich.

### Verarbeitungszeitraum des Holzes

Nach Verarbeitung im Schälwerk muss das Holz innerhalb von 8 Stunden im Sägewerk weiter verarbeitet werden. Dann ist eine umgehende Lagerung in einer klimatisierten Feuchtraumhalle erforderlich. Hier wird das Holz für den Tauchvorgang vorbereitet - durch Lagerung bei einer Temperatur von 35-55°C und einer Luftfeuchtigkeit in Höhe von 90%- Das Holz muss eine Temperatur von 35-55°C erreichen.
Diese Vorbereitung ist notwendig, um ein Schwinden, Verziehen und auch Rissbildung zu vermeiden, welche bei nicht klimatisierten Hölzern beim Tauchvorgang auftritt. Dieses würde die statischen Eigenschaften des Holzes stark beeinträchtigen,

### Verfahrensweise

### Tauchanlage

Die Holzbehandlungsanlage gemäß der vorliegenden Erfindung weist mindestens einen korrosionsfreien, thermostabilen und druckfesten Behälter zur Aufnahme des zu tränkenden Holzes sowie des Tränkmittels auf.

Im Rahmen der Entwicklung der vorliegenden Erfindung hat sich gezeigt, dass der innere Wannenkörper, wie auch Deckel inkl. Absauganlage für Wasserdampfbildung und Gase, wie Anschlussteile aus korrosionsfreiem Stahl vorteilhafterweise mit einem mechanisch beanspruchbaren und temperaturstabilen Oberflächenschutz hergestellt wird. Da solch ein Oberflächenschutz hinsichtlich seiner Dauerhaftigkeit begrenzt ist und regelmäßige Nacharbeiten erfordert, ist die Verwendung von korrosionsbeständigen Stählen (V2A-Stahl) erforderlich.

### Ausstattung der Holzbehandlungsanlage

Die Tauchanlage weist im Bodenbereich wie auch im Seitenbereich der Wände eine Heizeinheit wie mehrere Pumpen (Umwälzpumpen, Strömungspumpen), zur kontinuierlichen Bewegung des Tränkmittels auf. Hierdurch erfolgt eine gleichmäßige Umspülung des Werkstoffes.
Durch Umwälzung der Tränkmittel, insbesondere die Menge des zugeführten Tränkmittels während der Behandlung der eingetauchten Weichholzarten, kann in zuverlässiger Weise verhindert werden, dass sich Wärmenester und/oder Wärmestaus einstellen.
Mittels einer druckgesteuerten und/oder temperaturgesteuerten Vorrichtung in der Tauchanlage, mittels Pumpensteuerung und elektronischen Messfühlern wird eine Umspülung des Holzes mit einer exakten Temperatur gehalten, die beim Tauchvorgang nur um 0,5°C abweichen darf.
Bei einer vorteilhaften Ausgestaltung der vorliegenden Erfindung weist die Tauchanlage eine beheizbare Abtropfvorrichtung zum Lagern der behandelten Materialien (Holz + Zellstoffmaterialien) auf.

Des Weiteren weist die Tauchanlage mindestens eine Haltevorrichtung zum Eintauchen und zur Entnahme des Werkstoffes sowie zum Auffangen des vom behandelten Material abtropfenden Tränkmittels auf.
Die Tauchanlage hat eine Vakuum- oder Druckpumpe zur Erzeugung von Unter- oder Überdruck im Behälter, um eine Beschleunigung des Tauchvorganges herbeizuführen.
Druck- und Überdruck ist in den Versuchen nicht erforderlich gewesen. Dies' wurde von uns lediglich mit aufgenommen, um das Verfahren zu erweitern.

### Tauchverfahren

Nach Vorbereitung des Holzes in der klimatisierten Feuchtraumhalle werden die Weichhölzer (Birke, Kiefer, Pappel, Fichte) in die Tauchwanne eingebracht und veredelt.

Das Holz wird bei einer Temperatur von 126,5 °C, welche exakt einzuhalten ist, getaucht.
Eine höhere Tauchtemperatur führt zu statischen Verlusten der Holzsubstanz.
Die Tauchzeiten werden durch den Querschnitt des Holzes bestimmt.
Bei Durchmessern von 20-60 mm im Querschnitt beträgt die Tauchzeit 8 Stunden, bei Querschnitten von 90 x 90 mm kann eine Tauchzeit von bis zu 35 Stunden erforderlich sein.

Erfindungsgemäß wird eine Restfeuchte des getränkten Holzes in Höhe von 3,5% - 8% erreicht. Es handelt sich hierbei um gebundene Restfeuchte, die in den Cellulosewänden vorhanden ist. Diese darf in keinem Fall weiter heruntergesetzt werden, um den Zellaufbau in der Statik der gebundenen Zellwände nicht zu beschädigen. Nur so wird eine dauerhafte Standfestigkeit des Zellaufbaus erhalten.

Ein weiterer Vorteil des erfindungsgemäßen Verfahrens der Holzbehandlung liegt darin, die Zellstruktur des Holzes durch das Ausscheiden von Wasser und Zusatzstoffen vollständig mit Paraffin oder gebundenen Fetten, Festhaltestoffen (Öle) zu füllen und die Druckfestigkeit und nachträgliche Rissbildung - wie Schwinden des Holzes - zu verhindern. Zudem wird durch die Volltränkung verhindert, dass Pitzkulturen durch Hohlräume in den Zellwänden Angriffsmöglichkeiten erhalten. Somit kann keine Durchwachsung stattfinden.

Durch die Tauchanlage sowie durch das Behandlungsverfahren mittels des Tränkmittels in der Behälteranlage zur dauerhaften Nutzung von Holz ist eine dauerhafte, ökologisch unbedenkliche Holzveredlung insbesondere für extreme mechanische Beanspruchung und stark belastbaren Druck sowie klimatische Bedingungen gewährleistet.

### Tränkungsmittel

Das Tränkungsmittel kann aus folgenden Komponenten bestehen:
- Öle mit Festigungsmitteln, die nach Abkühlen des Holzkörpers erhärten
- Wachse, wie Paraffine mit unterschiedlich hergestellten Molekülketten, um die Schmelzpunkte bei unterschiedlichen Temperaturen zu steuern (50-130°C Schmelzpunkt der Wachse und Paraffine)
- Fließmittel - Die Paraffine, wie Wachse, werden mit einem hergestellten Fließmittel so chemisch eingestellt, dass die Paraffine und Wachse die Eigenschaften aufweisen, die erforderlich sind, die Hölzer bis in den Kern zu tauchen.

Die Holzkörper können in bestimmten Tauchzeiten und bei bestimmten Tauchtemperaturen so gesteuert werden, dass unterschiedliche, ansprechende bräunliche Oberflächen erreicht werden, die der der tropischen Hölzer gleich kommen.
Durch Einbringen von Farbpigmenten in das Tränkungsmittel können die Holzkörper von Weichholz in verschiedenen Farbtönen bis in den Kern eingefärbt werden. Dadurch wird es ermöglicht, die Hölzer nach dem Tauchverfahren zu bearbeiten und eine schöne, farblich variable Oberfläche zu erreichen.
Diese kommt der Optik der durch das herkömmliche Beizverfahren bearbeiteten Hölzer gleich.

### Ansprüche:

### Anspruch 1

### Fällzeit

Das Holz wird in der Wachstumsphase April - Mitte November geschlagen.
Nach einem Zeitraum von 4 Wochen nach dem Fällen ist es nicht mehr möglich, Holz bis in den Kern zu tauchen - Austausch des vorhandenen Wassers mit dem Tränkungsmittel (Öle, Erdölprodukte (Wachse), Paraffine).
Nach 4 Wochen findet eine Zellumwandlung statt, wobei sich die gesamte Zellstruktur verändert - Zellwände und die so genannten Tüpfel. Diese Veränderung wird als Verglasung bezeichnet.

### Anspruch 2

### Verarbeitungszeitraum des Holzes

Nach Verarbeitung der Rohstämme im Schälwerk und Sägewerk ist es erforderlich, innerhalb von 8 Stunden das Holz in die klimatisierte Feuchtraumhalle einzulagern um den Trocknungsprozess (Veränderung der Holzstruktur) zur verhindern. Dieses ist entscheidend, um die Struktur des Holzes, sowie auch die statischen- und Biegeeigenschaften nicht zu schwächen und den Verarbeitungsprozess zu ermöglichen.
Diese wird erreicht, in dem man das Holz in einer klimatisierten Feuchtraumhalle einlagert, wo das Holz bei einer Luftfeuchtigkeit von 90% auf eine Temperatur von 35-55°C gebracht wird.

Durch die oben beschriebene Klimatisierung des Holzes wird der Werkstoff für das Tauchverfahren vorbereitet.
Nur durch diese Vorbereitung ist es möglich, das Holz ohne Schwinden, Verziehen und Rissbildung bei einer Temperatur von 126,5°C erfolgreich zu tauchen.

### Anspruch 3

### Verfahrensweise.

### Tauchanlage

Die Tauchanlage weist im Boden- wie auch im Seitenbereich der Wände eine Heizeinheit wie auch mehrere Pumpen (Umwälzpumpen, Strömungspumpen) zur kontinuierlichen Bewegung des Tränkmittels auf.
Mittels einer druck- und/oder temperaturgesteuerten Vorrichtung der Tauchanlage, mittels Pumpensteuerung und elektronischen Messfühlern wird eine Umspülung des Holzes mit einer exakten Temperatur gehalten, die beim Tauchvorgang nur um 0,5°C abweichen darf.
Des Weiteren weist die Tauchanlage mindestens eine Haltevorrichtung zum Eintauchen des Holzes auf, wie auch eine beheizbare Abtropfvorrichtung zur Überprüfung der Oberfläche und Fertigstellung der Holz- und Zellstoffmaterialien.
Die Tauchanlage hat eine Vakuum- und Druckpumpe zur Erzeugung von Unter- oder Überdruck im Behälter, um eine Beschleunigung des Tauchvorganges herbeizuführen.

### Tauchverfahren

Nach Vorbereitung des Holzes in der klimatisierten Feuchtraumhalle werden die Weichhölzer (Birke, Kiefer, Pappel, Fichte) in die Tauchwanne eingebracht, veredelt und konserviert.
Das Holz wird bei einer Temperatur von 126,5°C, welche erfindungsgemäß exakt einzuhalten ist, getaucht. Die präzise Einhaltung der Temperatur ist erfindungsgemäß erforderlich, um eine Restfeuchte von 3,5-8% zu erlangen. Diese Restfeuchte ist notwendig, um den Zellaufbau in der Statik der gebundenen Zellwände nicht zu verändern und nicht zu beschädigen.

### Tränkungsmittel

Das Tränkungsmittel kann aus folgenden Komponenten bestehen:
- Öle mit Festigungsmitteln, die nach Abkühlen des Holzkörpers erhärten
- Wachse, wie Paraffine mit unterschiedlich hergestellten Molekülketten, um die Schmelzpunkte bei unterschiedlichen Temperaturen zu steuern (50-130°C Schmelzpunkt der Wachse und Paraffine)
- Fließmittel: Die Paraffine, wie Wachse, werden mit einem hergestellten Fließmittel so chemisch eingestellt, dass die Paraffine und Wachse die Eigenschaften aufweisen, die erforderlich sind, die Hölzer bis in den Kern zu tauchen.
- Farbpigmente: Um farblich variable Holzkörper zu erlangen, können dem Tränkungsmittel Farbpigmente zugesetzt werden.
Die Einfärbung des Holzes erfolgt ebenfalls bis in den Kern.

## Patentansprüche

1. Verfahren zum Tränken von frischem und feuchtem Holz mit mindestens einem kohlenwasserstoffhaltigen Tränkmittel, bei dem das Holz in das Tränkmittel eingetaucht und einer Temperaturbehandlung bei mindestens 120 °C unterworfen wird, wobei das Wasser in Form von Wasserdampf aus dem Holz austritt und durch das Tränkmittel ersetzt wird, so daß im behandelten Holz die Holzfeuchte auf einen Restfeuchtegehalt von höchstens 20 °C herabgesetzt wird, wobei das Holz nach dem Schälen und Sägen vor dem Tränken in einer klimatisierten Feuchtraumhalle bei einer Temperatur von 35 bis 55 °C und/oder einer relativen Luftfeuchtigkeit von mindestens 90 °C gelagert wird.

2. Verfahren zum Tränken von frischem und feuchtem Holz mit mindestens kohlenwasserstoffhaltigen Tränkmittel, bei dem das Holz in das Tränkmittel eingetaucht und einer Temperaturbehandlung bei einer Temperatur von 126,5 °C unterworfen wird, wobei das Wasser in Form von Wasserdampf aus dem Holz austritt und durch das Tränkmittel ersetzt wird, so daß im behandelten Holz die Holzfeuchte bis auf einen Restfeuchtegehalt von höchstens 20 % herabgesetzt wird.

3. Verfahren nach Anspruch 2, bei dem die Temperatur von 126,5 °C mit einer Genauigkeit von ± 0,5 °C eingehalten wird.

4. Verfahren nach Anspruch 2 oder 3, bei dem die Temperatur der Temperaturbehandlung durch Umspülen des Holzes mit dem Imprägniermittel vergleichmäßigt wird.

5. Verfahren zum Tränken von frischem und feuchtem Holz mit mindestens einem kohlenwasserstoffhaltigen Tränkmittel, bei dem das Holz in das Tränkmittel eingetaucht und einer Temperaturbehandlung bei mindestens 120 °C unterworfen wird, wobei das Wasser in Form von Wasserdampf aus dem Holz austritt und durch das Tränkmittel ersetzt wird, so daß im behandelten Holz die Holzfeuchte auf einen Restfeuchtegehalt von 3,5 % bis 8 % herabgesetzt wird.

6. Verfahren nach einem der Ansprüche 1 bis 5, bei dem die Temperaturbehandlung bei einer maximalen Temperatur des Imprägniermittels von 130 °C erfolgt.

7. Verfahren nach Anspruch 1 und/oder 2 und/oder 3 und/oder 4 und/oder 5 und/oder 6.

8. ***Fällzeit*** Das Holz wird in der Wachstumsphase April- Mitte November geschlagen. Nach einem Zeitraum von 4 Wochen nach dem Fällen ist es nicht mehr möglich, Holz bis in den Kern zu tauchen - Austausch des vorhandenen Wassers mit dem Tränkungsmittel (Öle, Erdölprodukte (Wachse), Parafine). Nach 4 Wochen findet eine Zellumwandlung statt, wobei sich die gesamte Zellstruktur verändert - Zellwände und die so genannten Tüpfel. Diese Veränderung wird als Verglasung bezeichnet.

9. ***Verarbeitungszeitraum des Holzes*** Nach Verarbeitung der Rohstämme im Schälwerk und Sägewerk ist es erforderlich, innerhalb von 8 Stunden das Holz in die klimatisierte Feuchtraumhalle einzulagern um den Trocknungsprozess (Veränderung der Holzstruktur) zur verhindern. Dieses ist entscheidend, um die Struktur des Holzes, sowie auch die statischen- und Biegeeigenschaften nicht zu schwächen und den Verarbeitungsprozess zu ermöglichen. Diese wird erreicht, in dem man das Holz in einer klimatisierten Feuchtraumhalle einlagert, wo das Holz bei einer Luftfeuchtigkeit von 90% auf eine Temperatur von 35-55°C gebracht wird. Durch die oben beschriebene Klimatisierung des Holzes wird der Werkstoff für das Tauchverfahren vorbereitet. Nur durch diese Vorbereitung ist es möglich, das Holz ohne Schwinden, Verziehen und Rissbildung bei einer Temperatur von 126,5°C erfolgreich zu tauchen.

10. ***Verfahrensweise.* Tauchanlage** Die Tauchanlage weist im Boden- wie auch im Seitenbereich der Wände eine Heizeinheit wie auch mehrere Pumpen (Umwälzpumpen, Strömungspumpen) zur kontinuierlichen Bewegung des Tränkmittels auf. Mittels einer druck- und/oder temperaturgesteuerten Vorrichtung der Tauchanlage, mittels Pumpensteuerung und elektronischen Messfühlern wird eine Umspülung des Holzes mit einer exakten Temperatur gehalten, die beim Tauchvorgang nur um 0,5°C abweichen darf. Des Weiteren weist die Tauchanlage mindestens eine Haltevorrichtung zum Eintauchen des Holzes auf, wie auch eine beheizbare Abtropfvorrichtung zur Überprüfung der Oberfläche und Fertigstellung der Holz- und Zellstoffmaterialien. Die Tauchanlage hat eine Vakuum- und Druckpumpe zur Erzeugung von Unter- oder Überdruck im Behälter, um eine Beschleunigung des Tauchvorganges herbeizuführen. **Tauchverfahren** Nach Vorbereitung des Holzes in der klimatisierten Feuchtraumhalle werden die Weichhölzer (Birke, Kiefer, Pappel, Fichte) in die Tauchwanne eingebracht und veredelt. Das Holz wird bei einer Temperatur von 126,5°C, welche erfindungsgemäß exakt einzuhalten ist, getaucht. Die präzise Einhaltung der Temperatur ist erfindungsgemäß erforderlich, um eine Restfeuchte von 3,5-8% zu erlangen. Diese Restfeuchte ist notwendig, um den Zellaufbau in der Statik der gebundenen Zellwände nicht zu verändern und nicht zu beschädigen. **Tränkungsmittel** Das Tränkungsmittel kann aus folgenden Komponenten bestehen:
- Öle mit Festigungsmitteln, die nach Abkühlen des Holzkörpers erhärten
- Wachse, wie Parafine mit unterschiedlich hergestellten Molekülketten, um die Schmelzpunkte bei unterschiedlichen Temperaturen zu steuern (50-130°C Schmelzpunkt der Wachse und Parafine)
- Fließmittel: Die Parafine, wie Wachse, werden mit einem hergestellten Fließmittel so chemisch eingestellt, dass die Parafine und Wachse die Eigenschaften aufweisen, die erforderlich sind, die Hölzer bis in den Kern zu tauchen.
- Farbpigmente: Um farblich variable Holzkörper zu erlangen, können dem Tränkungsmittel Farbpigmente zugesetzt werden.
Die Einfärbung des Holzes erfolgt ebenfalls bis in den Kern.
